(19)

Europäisches Patentamt
European Patent Office
Office européen des brevets

(11) **EP 3 392 930 A1**

(12) **EUROPEAN PATENT APPLICATION**
published in accordance with Art. 153(4) EPC

(43) Date of publication:
**24.10.2018 Bulletin 2018/43**

(21) Application number: **16875320.0**

(22) Date of filing: **15.11.2016**

(51) Int Cl.:
**H01M 2/16** (2006.01)

(86) International application number:
**PCT/JP2016/083862**

(87) International publication number:
**WO 2017/104336 (22.06.2017 Gazette 2017/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.12.2015 JP 2015243490**

(71) Applicant: **Nippon Kodoshi Corporation**
**Kochi-shi, Kochi 781-0395 (JP)**

(72) Inventors:
• **KUROIWA Masahiro**
**Kochi-shi**
**Kochi 781-0395 (JP)**

• **OGAWA Kentaro**
**Kochi-shi**
**Kochi 781-0395 (JP)**
• **WADA Norihiro**
**Kochi-shi**
**Kochi 781-0395 (JP)**
• **IGAWA Atsushi**
**Kochi-shi**
**Kochi 781-0395 (JP)**

(74) Representative: **Betten & Resch**
**Patent- und Rechtsanwälte PartGmbB**
**Maximiliansplatz 14**
**80333 München (DE)**

(54) **SEPARATOR FOR ALKALINE BATTERIES, AND ALKALINE BATTERY**

(57) Provided is a separator for alkaline batteries, which has low resistance, while exhibiting excellent strength in electrolyte solutions and excellent shielding properties. A separator for alkaline batteries, which is used for the purpose of separating a positive electrode active material and a negative electrode active material from each other and holding a electrolyte solution. This separator for alkaline batteries is composed of: a base layer that is formed only of alkali-resistant fibers; and an alkali-resistant resin layer that contains 0.1-25 $g/m^2$ of an alkali-resistant resin. The alkali-resistant fibers of the base layer are configured to contain alkali-resistant cellulose fibers in an amount of 10 to 100% by mass.

EP 3 392 930 A1

**Description**

Technical Field

The present invention relates to a separator for alkaline batteries, the separator being used in alkaline batteries, such as alkaline manganese batteries, nickel zinc batteries, silver oxide batteries, and air-zinc batteries, that use zinc as the negative electrode active material. The present invention also relates to an alkaline battery that uses the separator for alkaline batteries.

Background Art

Heretofore, the properties required for the separators for separating the positive electrode active material and the negative electrode active material from each other in alkaline batteries have been as follows: the shielding properties that prevent short-circuit failure caused by needle crystals (dendrites) of zinc oxide generated by the contact between the positive electrode active material and the negative electrode active material or discharging in the negative electrode; the property to hold electrolyte solutions such as potassium hydroxide; the durability that does not cause shrinkage and changes in properties in the electrolyte solution; and the properties that do not obstruct ion conduction. Moreover, the separator inside an alkaline battery may break and internal short-circuit may occur due to the impact applied to the alkaline battery during transportation or in the event of falling; thus, the separator is required to maintain a sufficient mechanical strength.

As the separator for alkaline batteries, mixed paper of synthetic fibers and cellulose fibers has been used. This mixed paper is mainly formed of vinylon fibers or nylon fibers, which are alkali-resistant synthetic fibers, and is prepared by blending rayon fibers, which are highly alkali-resistant cellulose fibers, dissolving pulp, cotton linter pulp, mercerized wood pulp, polynosic fibers, lyocell fibers, etc., to the vinylon or nylon fibers and further adding, as a binder, polyvinyl alcohol fibers, which are highly soluble in hot water of 60°C to 90°C.

In manufacturing these separators of the related art, the cellulose fibers described above are subjected to a beating process as necessary so as to generate fine fibrils from the fiber bodies to improve the denseness of the separators and enhance the shielding performance of the separators.

As the alkaline batteries are increasingly used in video cameras, portable imaging apparatuses, digital cameras, gaming consoles, remote controllers, etc., and as the performance of these apparatuses advances, the alkaline batteries are required to achieve higher current, and the heavy load discharge properties are considered to be important. Furthermore, recent years have seen a tendency of attaching importance to the intermittent discharge properties, which are properties close to actual use. In order to improve these discharge properties of the alkaline batteries, it is important that the internal resistance value of the batteries be decreased. If the internal resistance value is large, the voltage drop of the batteries occurs due to the resistance, and the electric capacity of the batteries is decreased. Thus, there is increasing demand for decreasing the resistance of the separators in order to improve the discharge properties of the batteries.

It is effective to reduce the thickness of the separators in order to decrease the resistance of the separators. However, reducing the thickness of the separators also decreases the strength of the separators and degrades the shielding properties of the separators. Thus, when thin separators are used, the short-circuit failure of the alkaline batteries more frequently occurs during manufacturing and transportation.

In order to decrease the incidence of the short-circuit failure of the alkaline batteries, it is effective to enhance the shielding properties of the separators.

In order to enhance the shielding properties of the separators, it is effective to increase the extent of beating of the cellulose fibers if the cellulose fibers are to be blended as a constituent material, and it is effective to blend synthetic fibers with smaller fiber diameters if the synthetic fibers are to be blended as a constituent material.

As described above, separators for alkaline batteries and having high shielding properties and low resistance values are in demand. However, the shielding properties and the resistance values of the separators are incompatible to each other, and so are the strength and the resistance values. It has been difficult to improve all of these properties simultaneously.

Moreover, heretofore, various configurations aimed at improving the properties have been proposed for the separators for alkaline batteries (for example, refer to PTL 1 to PTL 4).

Citation List

Patent Literature

[PTL 1] Japanese Unexamined Patent Application Publication No. 2-119049
[PTL 2] Japanese Unexamined Patent Application Publication No. 2012-54228
[PTL 3] Japanese Unexamined Patent Application Publication No. 2006-4844
[PTL 4] Japanese Unexamined Patent Application Publication No. 11-260337

Summary of Invention

Technical Problem

In a separator proposed in PTL 1, 10% by mass to 20% by mass of highly soluble polyvinyl alcohol fibers that dissolve in hot water of 60°C to 90°C is added. These highly soluble polyvinyl alcohol fibers are mixed with other raw material fibers, and formed into a wet paper web. The highly soluble polyvinyl alcohol fibers turn into a polyvinyl alcohol resin dissolved in water (hot water) in the wet paper web as a result of heating in the step of drying the wet paper web, and the polyvinyl alcohol resin melts and spreads between the cellulose fibers and synthetic fibers that constitute the wet paper web. Next, as drying proceeds, moisture evaporates from the wet paper web, and the polyvinyl alcohol resin that has spread between the fibers bonds the intersections between the fibers. As a result, the strength of the sheet is increased. In addition, since the polyvinyl alcohol resin is sparingly soluble in alkaline electrolyte solutions, the high strength is maintained in electrolyte solutions.

However, the polyvinyl alcohol resin that has melted in the drying step spreads between the fibers and takes a film form, and the film-form resin that bonds the fibers clogs pores in the separator. Thus, permeation of the ions through the separator is blocked, and the resistance value is increased. Moreover, since the separator has fewer voids, the liquid absorbing property and the liquid holding property of the separator are also degraded.

Here, when the extent of beating the cellulose fibers is decreased to decrease the resistance value of the separator, the shielding properties of the separator are also degraded, and the incidence of the short-circuit failure rises.

PTL 2 proposes a separator whose strength in the electrolyte solution is increased by crosslinking the cellulose fibers by addition of a polyamine epichlorohydrin resin to a slurry containing cellulose fibers.

This separator has excellent strength in alkaline electrolyte solutions, and does not break even when impact is applied to the battery, such as when the battery is dropped.

However, recent years have found that, compared to separators not containing the polyamine epichlorohydrin resin, this separator generates more hydrogen gas and is likely to cause pressure elevation inside the battery, resulting in leakage.

Moreover, in the papermaking industry in general, sheets are recycled; however, since the fibers are crosslinked by the polyamine epichlorohydrin resin, it has been difficult to re-disperse the constituent fibers, and recycling of the sheets has been difficult.

PTL 3 proposes a cellulose separator formed of crystal structures of cellulose I and cellulose II that have been beaten highly. Since the cellulose fibers are highly beaten, a dense sheet is formed, and a separator with high shielding properties is obtained.

However, since this separator is composed only of cellulose fibers, the strength in alkaline electrolyte solutions is insufficient, and after the battery is manufactured and then impact such as by dropping is applied to the battery, the separator breaks inside the battery and causes short-circuit failure in some cases.

The highly beaten cellulose fibers have an excellent water retaining property, and the amount of retained water during papermaking is large. Thus, if a binder component, such as polyvinyl alcohol fibers, is added to increase the strength in the electrolyte solutions, the polyvinyl alcohol resin that has melted in the drying step takes a film form and bonds between the cellulose fibers, thereby making it difficult to decrease the resistance value of the separator. Thus, the recent demand for further decreasing the resistance cannot be fully met.

PTL 4 proposes an example of using cellophane as a separator. Cellophane is prepared by dissolving natural cellulose, such as pulp, in a solvent and then performing precipitation therein so as to form a film-shaped sheet.

Thus, although a separator with excellent shielding properties is obtained, the separator does not satisfactorily hold the electrolyte solution, and, as described in PTL 4, this separator is typically bonded to a separator composed of a nonwoven fabric and used.

Thus, the step of bonding is necessary, which is inefficient; and compared to typical separators, this separator is expensive.

The present invention has been made in view of the problems described above, and an object thereof is to provide a separator for alkaline batteries and having excellent strength in electrolyte solutions, excellent shielding properties, and a low resistance. Another object thereof is to realize an alkaline battery offering a high current by using this separator.

Solution to Problem

The inventors of the present invention in solving the problems described above have conceived an idea of imparting alkali resistance to a nonwoven fabric having excellent shielding properties.

That is, a separator for alkaline batteries of the present invention includes a base layer (in other words, the nonwoven fabric) formed only of alkali-resistant fibers containing alkali-resistant cellulose fibers, and an alkali-resistant resin layer containing an alkali-resistant resin, such as polyvinyl alcohol, polyethylene or polypropylene.

The alkali-resistant resin content in the alkali-resistant resin layer is preferably 0.1 to 25.0 g/m$^2$. The base layer preferably contains 10% by mass or more of alkali-resistant cellulose fibers in 100% by mass of the alkali-resistant fibers.

The base layer is preferably a nonwoven fabric having a thickness of 15 to 130 $\mu$m and a density of 0.25 to 0.85 g/cm$^3$.

A compound, such as polycarboxylic acid, that swells in an alkaline electrolyte solution is preferably added to the alkali-resistant resin in the alkali-resistant resin layer.

The additive content is preferably in the range of 2 to 90% by mass in the alkali-resistant resin layer.

An alkaline battery of the present invention includes a positive electrode active material and a negative electrode active material separated from each other with a separator, in which the separator for alkaline batteries of the present invention described above is used as the separator.

The alkaline battery according to the present invention is preferably an alkaline manganese battery, a nickel zinc battery, a silver oxide battery, or an air-zinc battery. Advantageous Effects of Invention

According to the present invention, the alkali-resistant resin in the alkali-resistant resin layer maintains the strength of the separator in the alkaline electrolyte solution in the alkaline battery. Moreover, the separator can exhibit shielding properties due to the base layer.

In the present invention, an alkali-resistant resin layer containing an alkali-resistant resin is provided separately from the base layer. Thus, compared to the structure in which an alkali-resistant resin permeates into the fibers, the resistance value can be decreased. Description of Embodiments

Embodiments of the present invention will now be described in detail below.

The separator for alkaline batteries according to the present invention includes a base layer, such as a nonwoven fabric, and an alkali-resistant resin layer. The alkali-resistant resin layer contains an alkali-resistant resin.

Since the alkali-resistant resin layer is provided, the strength of the separator in the electrolyte solution is maintained high. Moreover, the increase in the resistance value can be suppressed. This is due to the following reasons.

In a typical separator, an alkali-resistant resin in a fiber state is mixed into the papermaking raw materials, and then melted and solidified in the drying step to bond between the fibers so as to improve the strength in the alkaline electrolyte solutions. However, the fibrous alkali-resistant resin is widely dispersed in the wet paper web, and when the fibrous alkali-resistant resin melts and solidifies, the voids in the entire separator become clogged. Moreover, since the alkali-resistant resin permeates the entire separator widely and homogeneously, it has been difficult to decrease the alkali-resistant resin content in order to maintain the enough strength in the electrolyte solutions to withstand practical use. This has led to an increase in the resistance value of the separator.

In contrast, the separator of the present invention includes a base layer and an alkali-resistant resin layer.

The base layer is composed only of the alkali-resistant fibers, and 10 to 100% by mass of alkali-resistant cellulose fibers are contained in 100% by mass of the alkali-resistant fibers.

The alkali-resistant resin layer contains an alkali-resistant resin.

The alkali-resistant resin content in the alkali-resistant resin layer is preferably 0.1 to 25.0 g/m$^2$. When the content is less than 0.1 g/m$^2$, the strength in the electrolyte solution is insufficient. When the content exceeds 25.0 g/m$^2$, it becomes difficult to suppress the increase in resistance value. When the content exceeds 25.0 g/m$^2$, the liquid absorbing property and the liquid holding property of the separator are degraded, the electrolyte solution-holding power is degraded, and the service life of the battery is shortened in some cases.

The separator of the present invention can be manufactured by, for example, forming a sheet that serves as the base layer, and then applying a coating solution containing the alkali-resistant resin to the sheet so as to form the alkali-resistant resin layer.

When the alkali-resistant resin layer is formed by application onto the sheet, the alkali-resistant resin does not permeate into the gaps between respective fibers inside the sheet, and bonds between the fibers by forming a layer at a relatively shallow position. In the portion where the percentage of the alkali-resistant resin is high, the strength in alkaline electrolyte solutions is significantly improved. Thus, even when the alkali-resistant resin content in the separator is decreased from what is typical, the strength in alkaline electrolyte solutions can be sufficiently improved.

As a result, compared to a separator having a structure in which the alkali-resistant resin bonds the fibers inside the sheet by mixing the fibers of the alkali-resistant resin into the raw materials, the increase in resistance value can be significantly suppressed.

Moreover, the method for applying the coating solution containing the alkali-resistant resin may be any known method and is not particularly limited.

Specifically, facilities such as a roll coater, a die coater, a blade coater, a bar coater, an impregnation coater, a spray coater, and a curtain coater can be used.

The coating solution containing the alkali-resistant resin may be applied to one side of the base layer of both sides of the base layer.

The important point for application in manufacturing the separator for alkaline batteries of the present invention is to homogeneously apply the alkali-resistant resin onto the base. Thus, any method other than the methods described above may be employed as long as homogeneous application is realized.

The alkali-resistant resin used in the present invention is preferably a resin such as a polyvinyl alcohol resin, a polyethylene resin, or a polypropylene resin, and these resins may be modified with a carboxylic acid or the like. Moreover, two or more of these resins may be used in combination.

In particular, from the viewpoint of the affinity to the electrolyte solution, a polyvinyl alcohol resin is preferable, and an anion-modified polyvinyl alcohol resin, which is modified by a carboxylic acid or the like, is more preferable.

Cation-modified alkali-resistant resins are not suitable since the amount of gas generated when formed into a battery increases.

Note that in the present invention, the degree of polymerization of these alkali-resistant resins is not particularly limited.

Moreover, when the alkali-resistant resin is a polyvinyl alcohol-based resin, the saponification degree is also not particularly limited.

The coating solution containing the alkali-resistant resin may be prepared into any form. That is, the coating solution may be an aqueous solution or an emulsion prepared by emulsification.

The alkali-resistant resin preferably contains, as an additive, a substance that holds the alkaline electrolyte solution and swells.

When the alkali-resistant resin containing the additives is applied, the increase in the resistance value of the separator can be suppressed.

Any substance that holds the electrolyte solution and swells can be used as the additive without limitation.

Specific examples thereof include polycarboxylic acids, such as polyacrylic acid, polymethacrylic acid, and a styrene maleic anhydride copolymer, and salts thereof.

Here, known separator containing alkali-resistant resins have higher resistance values than separators that do not contain alkali-resistant resins. This is presumably because the alkali-resistant resin that bonds the fibers has a film form, and the electrolyte solution-holding property is low.

In the present invention also, although the increase in resistance value is smaller than in the related art, the same tendency is observed since the alkali-resistant resin is contained.

Meanwhile, the additive described above has high hydrophilicity, holds the electrolyte solution well, and swells. Thus, the alkali-resistant resin containing the additive also has an enhanced electrolyte solution-holding property. As a result, even when the alkali-resistant resin is applied, the decrease in ion permeability due to the alkali-resistant resin rarely occurs, and the increase in the resistance value of the separator is suppressed. Moreover, since the liquid holding property of the separator is enhanced by the additive, evaporation of the electrolyte solution is suppressed, and the service life of the battery obtained therewith can be extended.

Due to the above-described reasons, the additive and the alkali-resistant resin must be homogeneously mixed. Thus, the additive is preferably mixed into the coating solution before application, and the mixed coating solution is preferably applied to the base.

The additive is preferably contained in an amount in the range of 2.0 to 90.0% by mass in the alkali-resistant resin layer.

When the additive content in the alkali-resistant resin layer is less than 2.0% by mass, the increase in the resistance value of the separator is difficult to suppress even with the alkali-resistant resin containing the additive. When the additive content in the alkali-resistant resin layer exceeds 90.0% by mass, the resistance value cannot be further decreased.

When the additive is used in the alkali-resistant resin layer, not only the additive content but also the alkali-resistant resin content and the additive content are respectively important.

The alkali-resistant resin content is preferably 0.1 to 5 $g/m^2$ and the additive content is preferably 20 $g/m^2$ or less. Furthermore, the alkali-resistant resin content is more preferably 0.1 to 2.0 $g/m^2$ and the additive content is more preferably 10 $g/m^2$ or less.

In other words, the alkali-resistant resin layer preferably has 0.1 to 25.0 $g/m^2$ and an additive content of 2 to 90%, and the alkali-resistant resin content and the additive content are preferably respectively within the above-described ranges.

In addition to the additive described above, a surfactant, such as a nonionic surfactant, an anionic surfactant, or a cationic surfactant, may be added to improve the affinity to the electrolyte solution. Note that any nonionic surfactant or anionic surfactant can be used since there is no risk of increasing the amount of the gas generated after the separator is assembled into the battery.

In the separator for alkaline batteries of the present invention, the base layer is preferably a nonwoven fabric formed of alkali-resistant fibers containing 10 to 100% by mass of beaten alkali-resistant cellulose fibers.

When the beaten alkali-resistant cellulose fibers are used as the alkali-resistant fibers used in the base layer, an extremely dense sheet is formed; thus, the shielding properties of the separator are improved, and the incidence of the short-circuit failure when the separator is assembled into a battery can be decreased.

As such, a separator that contains 10 to 100% by mass of the beaten alkali-resistant cellulose fibers is preferable since the dimensional stability and the chemical stability in the electrolyte solution and the shielding properties can be improved simultaneously.

Examples of the alkali-resistant fibers constituting the base layer of the separator according to the present invention that can be used include alkali-resistant cellulose fibers, alkali-resistant synthetic fibers, and alkali-resistant chemical fibers.

The alkali-resistant cellulose fibers are preferably dissolving pulp, mercerized pulp, or regenerated cellulose fibers. Examples of the alkali-resistant synthetic fibers and the alkali-resistant chemical fibers that can be used include nylon, polyethylene, polypropylene, and acetalized polyvinyl alcohol.

These alkali-resistant fibers do not shrink or decompose even when immersed in alkaline electrolyte solutions. Thus, when these fibers are used in the separator for alkaline batteries, an excellent separator with excellent dimensional stability and chemical stability is obtained.

When the base layer of the separator is not a nonwoven fabric formed of alkali-resistant fibers, the dimensional stability and the chemical stability of the separator cannot be improved.

When the dimensional stability is poor, the separator will shrink in the electrolyte solution. In the battery manufacturing process, the electrolyte solution is injected before the negative electrode active material is loaded. At this stage, the separator may shrink due to the alkaline electrolyte solution, and when attempting to load a prescribed amount of the negative electrode active material, the negative electrode active material may overflow from the upper portion of the separator, or the sealing by the separator may become insufficient. As a result, the discharge capacity of the battery may decrease, or the active material overflow may result in occurrence of short-circuit failure.

If the chemical stability is low, the separator becomes decomposed in the electrolyte solution, and the short-circuit failure may occur, or the inner pressure of the battery may increase due to the gas generated by decomposition and leakage may result.

As discussed above, the role of the beaten alkali-resistant cellulose fibers is to improve the shielding properties of the separator and improve the dimensional stability and the chemical stability in the electrolyte solution.

Moreover, dissolving pulp, mercerized pulp, regenerated cellulose fibers, or the like can be used as the alkali-resistant cellulose fibers.

Pulp is obtained by adding an alkaline chemical to wood chips and the like that serve as the pulp raw materials, and processing the raw materials at high temperature and high pressure (pulping) so as to remove binding substances such as lignin and hemicellulose. The resulting pulp is immersed in an aqueous sodium hydroxide solution having a concentration as high as about 17% by mass so as to obtain mercerized pulp.

The dissolving pulp involves a manufacturing method and steps different from those of typical papermaking pulp prepared by adding an alkaline chemical to chips of wood or the like and performing pulping. To make dissolving pulp, before pulping, wood or non-wood chips are subjected to a steaming process at high temperature in an acidic environment of pH 2 to 3 so as to hydrolyze the binding substances contained in the chips. After the steaming process, pulping is performed to obtain pulp. The pulped pulp is further treated with an aqueous alkaline solution, such as sodium hydroxide, at about 2 to 10% by mass to extract and remove the binding substances.

During pulping, the chips of wood or the like are treated in an acidic environment so that the binding substances interlaced between the cellulose chains are hydrolyzed into lower-molecular-weight substances. Thus, the binding substances can be easily extracted and removed by the aqueous alkaline solution after pulp formation.

Note that the pulping method for these types of pulp is not particularly limited and may be any known method such as a sulfite method, a sulfate method, a soda method, or a kraft method.

The regenerated cellulose fibers are obtained by dissolving the dissolving pulp in a solvent such as N-methylmorpholine oxide and performing precipitation of fibrous substances.

These alkali-resistant cellulose fibers have a higher cellulose purity than typical papermaking pulp. Moreover, whereas typical papermaking pulp is formed of a crystal structure of cellulose I, these alkali-resistant cellulose fibers contain a crystal structure of cellulose II.

High-purity cellulose fibers containing cellulose II have excellent dimensional stability and chemical stability in the electrolyte solution.

This is presumably because the alkali treatment is performed during the fiber manufacturing process, and thus dimensional changes, such as shrinking, rarely occur even when these fibers are immersed in alkali again. Moreover, presumably due to this alkali treatment, the components that elute into alkali are extracted in advance, and thus, the raw material becomes chemically stable in the electrolyte solution.

Due to the above-described reasons, the alkali-resistant cellulose fibers are favorable for improving the dimensional stability and chemical stability of the separator.

In order to improve the shielding properties of the separator, the extent of beating the alkali-resistant cellulose fibers is important.

The fibers are beaten and become finer as they are dispersed in water and put under shear force. The raw material containing the beaten alkali-resistant cellulose fibers is made into paper so as to obtain a very dense separator with excellent shielding properties.

The extent of beating the beaten alkali-resistant cellulose fibers is preferably that the Canadian standard freeness (CSF) measured according to JIS P 8121 is in the range of 500 ml to 0 ml.

When the CSF value exceeds 500 ml, occurrence of fibrils is insufficient, the denseness becomes insufficient, and the shielding properties cannot be reliably obtained.

When the cellulose fibers are beaten, the CSF value gradually decreases and eventually reaches 0 ml. When beating is further continued, the amount of fine fibers that pass through the holes in the screen plate increases, and the CSF value starts to increase. The alkali-resistant cellulose fibers whose CSF value has increased to exceed 500 ml can be used as the beaten alkali-resistant fibers in the present invention without any inconvenience. However, when the CSF value has increased to exceed 700 ml, the fibers become excessively fine and are not suitable as the papermaking raw material.

When the CSF value of the beaten alkali-resistant cellulose fibers is within the above-described range, the shielding properties of the separator are improved, and the incidence of the short-circuit failure of the alkaline battery can be decreased.

The facility used to beat the fibers may be any typical facility used in preparation of the papermaking raw materials. Examples include, in general, a beater, a conical refiner, a disc refiner, and a high-pressure homogenizer.

The method for forming the nonwoven fabric, which serves as the base layer to which the alkali-resistant resin is applied, may be any, such as fourdrinier papermaking, tanmo papermaking, cylinder papermaking, or any combination of the foregoing.

The nonwoven fabric constituting the base layer preferably includes at least one layer having a density of 0.25 to 0.85 g/cm$^3$.

At a density less than 0.25 g/cm$^3$, the shielding properties of the separator are insufficient, and the incidence of the short-circuit failure when the separator is assembled into the battery is increased. Moreover, when the alkali-resistant resin is applied, the coating solution widely penetrates into the interior of the separator and solidifies, and the resistance value of the separator may increase thereby.

At a density exceeding 0.85 g/cm$^3$, the sheet becomes excessively dense, and the resistance value of the separator may increase.

As described above, the above-described density range is preferable from the viewpoint of the resistance value of the separator.

The thickness of the nonwoven fabric constituting the base layer is preferably 15 to 130 μm.

When the thickness is less than 15 μm and the separator is assembled into the battery, incidence of the short-circuit failure cannot be decreased although the separator of the present invention has high denseness. When the thickness exceeds than 130 μm and the separator is assembled into the battery, the internal resistance value increases although the separator of the present invention has a low resistance value.

The nonwoven fabric constituting the base layer may be subjected to thickness adjustment through calendering, embossing, or the like, as long as the above-described thickness and density are satisfied.

Calendering, embossing, wetting, or the like may be performed after the alkali-resistant resin layer is formed.

For wetting, a surfactant, such as a nonionic surfactant, an anionic surfactant, or a cationic surfactant, can be used.

Among the surfactants described above, a nonionic surfactant or an anionic surfactant can be used since there is no risk of increasing the amount of the gas generated after the separator is assembled into the battery.

According to the above-described features, the shielding properties of the separator for alkaline batteries and the strength of the separator in the electrolyte solution are improved, and a separator having an excellent liquid holding property can be obtained without increasing the resistance value.

The performance of the alkaline battery that uses this separator is also improved.

The alkaline battery of the present invention is configured so that the positive electrode active material and the negative electrode active material are separated from each other by a separator, which is the separator for alkaline batteries according to the present invention.

The alkaline battery according to the present invention can be used as any of various batteries that use alkaline electrolyte solutions, such as alkaline manganese batteries, nickel zinc batteries, silver oxide batteries, and air-zinc batteries, without any inconvenience.

Moreover, the manufacturing method and the size of the alkaline battery of the present invention are not particularly limited as long as the separator of the present invention is used.

When a structure in which the alkali resin layer is formed only on one side of the base layer of the alkaline battery separator of the present invention is employed to form an alkaline battery, the alkali resin layer may be formed on the positive electrode side of the separator or the negative electrode side of the separator, and an alkaline battery can be configured without any inconvenience in either cases.

EXAMPLES

Specific Examples, Comparative Examples, and Conventional Examples of the separator for alkaline batteries according to the present invention will now be described in detail.

For the separators for alkaline batteries of the respective Examples of the present invention described below, a nonwoven fabric was obtained by a papermaking method that uses a fourdrinier paper machine, a fourdrinier cylinder paper machine, a tanmo paper machine, or the like. In other words, the separator was formed of a wet-process nonwoven fabric.

[Separator evaluation method]

The specific properties of the separators for alkaline batteries of Examples, Comparative Examples, and Conventional Examples were measured under the following conditions by the following methods.

[CSF value]

The CSF value of each separator was measured by the method prescribed in "JIS P 8121-2, Pulps - Determination of drainability - Part 2: "Canadian Standard" freeness method".

[Thickness]

The thickness of the separator was measured by using a micrometer described in "5.1.1 Measuring instrument and measuring method, a) case of using an outer side micrometer" prescribed in "JIS C 2300-2, Cellulosic papers for electrical purposes - Part 2: Methods of test, 5.1 Thickness" and by a method involving "5.1.3 Case of measuring thickness by folding paper" in which paper was folded in 10.

[Density]

The density of the separator in a bone dry state was measured by the method prescribed in the B method of "JIS C 2300-2, Cellulosic papers for electrical purposes - Part 2: Methods of test, 7.0A Density".

[Coating amount]

The coating amount of the alkali-resistant resin or the coating amount of the mixture of the alkali-resistant resin and the additive was determined as follows.

$$\text{Coating amount } (g/m^2) = (W2 - W1)/S$$

The coating amount was measured by using a test piece prepared by cutting the separator of the embodiment into a predetermined size (250 mm $\times$ 250 mm).

Specifically, the mass (g) of the base was assumed to be W1, the mass (g) of the sheet after application was assumed to be W2, and the measured area (0.0625 $m^2$) was assumed to be S in calculating the coating amount.

The mass of the sheet here is the dry mass measured after drying the sheet at 105°C for 1 hour.

[Additive content]

The additive content added to the alkali-resistant resin was determined as follows.

$$\texttt{Additive content (\% by mass) = Z2/Z1 × 100}$$

The coating amount (g) measured as described above was assumed to be Z1, and the mass (g) of the additive was assumed to be Z2 in calculating the additive content.

Z2 was measured at the time of mixing the alkali-resistant resin and the additive to prepare the coating solution.

Note that these masses are all dry masses, and represent solid ratios after application to the separator and crying irrespective of the concentration of the coating solution.

[Rate of change in dimensions]

The rate of change in dimensions of the separator was measured by the following method.

The separator of the embodiment was cut into a predetermined size (100 mm × 100 mm), and the area was measured. Next, the test piece was immersed in a 40% by mass aqueous potassium hydroxide (KOH) solution at 70°C for 8 hours, the area of the test piece after immersion was measured while the test piece was wet with the aqueous KOH solution, and the area shrinking percentage calculated by the formula below was assumed to be the rate of change in dimensions.

$$\texttt{Area shrinking percentage (\%) = \{(A1 - A2)/A1\} × 100}$$

The area before immersion in the 40% by mass aqueous KOH solution was assumed to be A1, and the area after the immersion in the 40% by mass aqueous KOH solution was assumed to be A2 in calculating the area shrinking percentage.

[Wet strength]

A test piece having a width of 15 mm was taken from the separator in the longitudinal direction, immersed in a 40% by mass aqueous KOH solution for 3 minutes, and then excess 40% by mass aqueous KOH solution attached to the test piece was blotted with a paper filter. The tensile strength of the test piece wet with the 40% by mass aqueous KOH solution was measured according to the method prescribed in "JIS P 8113, Paper and board - Determination of tensile properties, Part 2: Constant rate of elongation method", and the result was assumed to be the wet strength of the separator.

[Liquid holding percentage]

The separator was cut into a 50 mm × 50 mm square and immersed for 10 minutes in a 40% by mass aqueous KOH solution after measuring the mass after drying. This test piece was attached to a glass plate slanted at an angle of 45 degrees and fixed thereat for 3 minutes so as to remove the excess 40% by mass aqueous KOH solution by allowing the solution to run down; the mass of the test piece was measured; and then the liquid holding percentage was determined by the following formula.

$$\texttt{Liquid holding percentage (\%) = (X2 - X1)/X1 × 100}$$

The mass before immersion (the mass after drying) was assumed to be X1, and the mass after immersion was assumed to be X2 in calculating the liquid holding percentage.

[Electrical resistance]

The separator was inserted between platinum electrodes (circular electrodes with a diameter of 20 mm prepared by platinization of platinum) that were immersed in a 40% by mass aqueous KOH solution and extended parallel to each other with a space of about 2 mm therebetween; and the increase in electrical resistance (m$\Omega$) between the electrodes that occurred due to the insertion was assumed to be the electrical resistance of the separator. The electrical resistance between the electrodes was measured by using an LCR meter at a frequency of 1000 Hz.

This measurement method is referred to as measuring the electrical resistance but is a method for measuring the ionic resistivity of the separator in the electrolyte solution (40% by mass aqueous KOH solution).

[Shielding properties]

When metal ions are present in the battery system, needle crystals (dendrites) precipitate due to the difference in ionization tendency with respect to the electrode material (mainly, zinc in the negative electrode). If the shielding properties of the separator are low, the dendrites may cause short-circuit.

Here, the dendrite resistance was measured as the index for determining the shielding properties of the separator. Specifically, the following method was used for measurement.

A 100 × 100 mm test piece was cut out from the separator, and placed on the zinc for alkaline batteries. Next, ten pieces of copper powder were placed on the separator, and the separator was wetted with a electrolyte solution (40% by mass aqueous KOH solution) and left to stand still in a 20°C environment for 120 hours.

Then the separator was removed, and the number of sites where dendrites penetrated to reach the surface opposite from the surface on which the copper powder was placed was counted.

[Droplet disappearance time]

When an alkali-resistant resin layer is formed on a front surface layer of the separator, the electrolyte solution permeability differs between the front and back surfaces of the separator. Here, the droplet disappearance time (second) was measured as a technique for confirming formation of the alkali-resistant resin layer on the front surface layer by application of the alkali-resistant resin.

Specifically, the following method was used for measurement.

Onto the separator, 50 $\mu$l of a electrolyte solution (40% by mass aqueous KOH solution) was dropped, and the time taken until the dropped droplet infiltrated the separator and disappeared was measured. This measurement was performed on the front surface and the rear surface, which are respectively referred to as the "A surface" and the "B surface".

[EXAMPLE 1]

A mixture containing 10% by mass of a raw material having a CSF value of 450 ml and being prepared by beating mercerized softwood kraft pulp, 50% by mass of polypropylene fibers, and 40% by mass of nylon fibers was subjected to tanmo papermaking so as to obtain a base. A coating solution prepared by dissolving polyvinyl alcohol was applied to the base and dried so as to obtain a separator having a thickness of 15 $\mu$m, a density of 0.25 g/cm$^3$, a coating amount of 0.1 g/m$^2$, a rate of change in dimensions of 2.5%, a wet strength of 6.5 N, a liquid holding percentage of 500%, an electrical resistance of 9.0 m$\Omega$, a shielding property of 1, and a droplet disappearance time of 60 seconds for the A surface and 20 seconds for the B surface.

[EXAMPLE 2]

A coating solution prepared by dissolving polyvinyl alcohol and polyacrylic acid was applied to the base, which was prepared by tanmo papermaking using the same raw materials as in Example 1, and dried so as to obtain a separator having a thickness of 15 $\mu$m, a density of 0.25 g/cm$^3$, a coating amount of 1.0 g/m$^2$, a rate of change in dimensions of 2.5%, a wet strength of 6.4 N, a liquid holding percentage of 500%, an electrical resistance of 8.2 m$\Omega$, a shielding property of 1, and a droplet disappearance time of 65 seconds for the A surface and 20 seconds for the B surface. The additive content of this coating layer was 90.0%.

[EXAMPLE 3]

A coating solution prepared by dissolving polyvinyl alcohol and polyacrylic acid was applied to the base, which was prepared by tanmo papermaking using the same raw materials as in Example 1, and dried so as to obtain a separator having a thickness of 15 $\mu$m, a density of 0.25 g/cm$^3$, a coating amount of 1.1 g/m$^2$, a rate of change in dimensions of 2.5%, a wet strength of 6.4 N, a liquid holding percentage of 500%, an electrical resistance of 8.2 m$\Omega$, a shielding property of 1, and a droplet disappearance time of 65 seconds for the A surface and 20 seconds for the B surface. The additive content of this coating layer was 90.9%.

[EXAMPLE 4]

Fourdrinier papermaking was performed by using a raw material having a CSF value of 0 ml and being prepared by beating a mixture of 70% by mass of softwood sulfite dissolving pulp and 30% by mass of lyocell fibers, which are regenerated cellulose fibers, so as to obtain a base. A coating solution prepared by mixing a polyethylene emulsion and a polyacrylic acid solution was applied to the base and dried so as to obtain a separator having a thickness of 60 $\mu$m, a density of 0.65 g/cm$^3$, a coating amount of 4.0 g/m$^2$, a rate of change in dimensions of 1.1%, a wet strength of 15.0 N, a liquid holding percentage of 480%, an electrical resistance of 17.0 m$\Omega$, a shielding property of 0, and a droplet disappearance time of 400 seconds for the A surface and 200 seconds for the B surface. The additive content of this coating layer was 50.0%.

[EXAMPLE 5]

A mixture of 80% by mass of a raw material having a CSF value of 300 ml and being prepared by beating mercerized softwood kraft pulp, and 20% by mass of nylon fibers was subjected to cylinder papermaking so as to obtain a base. A coating solution prepared by mixing a polypropylene emulsion and a polyacrylic acid solution was applied to the base and dried so as to obtain a separator having a thickness of 100 $\mu$m, a density of 0.35 g/cm$^3$, a coating amount of 5.0 g/m$^2$, a rate of change in dimensions of 1.5%, a wet strength of 9.0 N, a liquid holding percentage of 500%, an electrical resistance of 14.0 mQ, a shielding property of 1, and a droplet disappearance time of 70 seconds for the A surface and 18 seconds for the B surface. The additive content of this coating layer was 90.0%.

[EXAMPLE 6]

A raw material having a CSF value of 300 ml and being prepared by further beating the mercerized softwood kraft pulp after the CSF value reached 0 ml was subjected to fourdrinier papermaking so as to obtain a base. A coating solution prepared by mixing polyvinyl alcohol and polymethacrylic acid was applied to the base, dried, and calendered so as to obtain a separator having a thickness of 50 $\mu$m, a density of 0.70 g/cm$^3$, a coating amount of 3.0 g/m$^2$, a rate of change in dimensions of 1.4%, a wet strength of 13.0 N, a liquid holding percentage of 400%, an electrical resistance of 16.0 m$\Omega$, a shielding property of 0, and a droplet disappearance time of 350 seconds for the A surface and 220 seconds for the B surface. The additive content of this coating layer was 66.7%.

[EXAMPLE 7]

A raw material prepared by mixing 80% by mass of a raw material having a CSF value of 100 ml and being prepared by beating mercerized softwood kraft pulp, and 20% by mass of acetalized polyvinyl alcohol fibers was subjected to fourdrinier papermaking so as to obtain a base. A coating solution prepared by mixing polyvinyl alcohol and sodium polyacrylate was applied to the base and dried so as to obtain a separator having a thickness of 30 $\mu$m, a density of 0.55 g/cm$^3$, a coating amount of 10.0 g/m$^2$, a rate of change in dimensions of 1.0%, a wet strength of 12.0 N, a liquid holding percentage of 430%, an electrical resistance of 14.0 m$\Omega$, a shielding property of 0, and a droplet disappearance time of 280 seconds for the A surface and 110 seconds for the B surface. The additive content of this coating layer was 90.0%.

[EXAMPLE 8]

A raw material having a CSF value of 100 ml and being prepared by further beating the mercerized softwood kraft pulp after the CSF value reached 0 ml was subjected to fourdrinier papermaking so as to obtain a base. A coating solution prepared by mixing carboxylic acid-modified polyvinyl alcohol and polyacrylic acid was applied to the base and dried so as to obtain a separator having a thickness of 40 $\mu$m, a density of 0.60 g/cm$^3$, a coating amount of 5.0 g/m$^2$, a rate of change in dimensions of 2.0%, a wet strength of 17.0 N, a liquid holding percentage of 420%, an electrical resistance of 19.5 m$\Omega$, a shielding property of 0, and a droplet disappearance time of 550 seconds for the A surface and 190 seconds for the B surface. The additive content of this coating layer was 2.0%.

[EXAMPLE 9]

A raw material having a CSF value of 100 ml and being prepared by further beating a mixture of 50% by mass of mercerized softwood kraft pulp and 50% by mass of mercerized hardwood kraft pulp after the CSF value reached 0 ml was subjected to fourdrinier papermaking so as to obtain a base. A coating solution prepared by mixing polyvinyl alcohol and polyacrylic acid was applied to the base and dried so as to obtain a separator having a thickness of 40 $\mu$m, a density of 0.60 g/cm$^3$, a coating amount of 5.0 g/m$^2$, a rate of change in dimensions of 2.0%, a wet strength of 17.0 N, a liquid holding percentage of 430%, an electrical resistance of 20.3 m$\Omega$, a shielding property of 0, and a droplet disappearance time of 570 seconds for the A surface and 220 seconds for the B surface. The additive content of this coating layer was 2.0%.

[EXAMPLE 10]

A layer prepared by fourdrinier papermaking using a raw material having a CSF value of 700 ml and prepared by further beating mercerized softwood kraft pulp after the CSF value reached 0 ml and started to increase, and a layer prepared by cylinder papermaking using a raw material prepared by beating the same raw material until the CSF value was 350 ml were combined so as to obtain a separator base. A coating solution prepared by mixing polyvinyl alcohol and polyacrylic acid was applied to the base and dried so as to obtain a separator having a thickness of 80 $\mu$m, a density of 0.53 g/cm$^3$, a coating amount of 14.0 g/m$^2$, a rate of change in dimensions of 1.5%, a wet strength of 16.0 N, a liquid holding percentage of 450%, an electrical resistance of 19.0 m$\Omega$, a shielding property of 0, and a droplet disappearance time of 430 seconds for the A surface and 30 seconds for the B surface. The additive content of this coating layer was 71.4%.

[EXAMPLE 11]

A raw material having a CSF value of 650 ml and being prepared by further beating the mercerized softwood kraft pulp after the CSF value reached 0 ml was subjected to fourdrinier papermaking so as to obtain a base. A coating solution prepared by mixing polyvinyl alcohol and polyacrylic acid was applied to the base and dried so as to obtain a separator having a thickness of 140 $\mu$m, a density of 0.90 g/cm$^3$, a coating amount of 25.0 g/m$^2$, a rate of change in dimensions of 0.8%, a wet strength of 18.0 N, a liquid holding percentage of 330%, an electrical resistance of 20.4 m$\Omega$, a shielding property of 0, and a droplet disappearance time of 560 seconds for the A surface and 280 seconds for the B surface. The additive content of this coating layer was 80.0%.

[EXAMPLE 12]

The same raw material as that in Example 11 was used to perform fourdrinier papermaking so as to obtain a base. A coating solution prepared by mixing polyvinyl alcohol and polyacrylic acid was applied to the base and dried so as to obtain a separator having a thickness of 130 $\mu$m, a density of 0.85 g/cm$^3$, a coating amount of 5.5 g/m$^2$, a rate of change in dimensions of 0.9%, a wet strength of 20.0 N, a liquid holding percentage of 350%, an electrical resistance of 24.0 m$\Omega$, a shielding property of 0, and a droplet disappearance time of 520 seconds for the A surface and 265 seconds for the B surface. The additive content of this coating layer was 9.1%.

[Comparative Example 1]

A raw material having a CSF value of 300 ml and being prepared by further beating a mixture of 90% by mass of mercerized softwood kraft pulp and 10% by mass of cotton linter pulp after the CSF value reached 0 ml was subjected to fourdrinier papermaking so as to obtain a base. A coating solution prepared by mixing polyvinyl alcohol and polyacrylic acid was applied to the base and dried so as to obtain a separator having a thickness of 60 $\mu$m, a density of 0.50 g/cm$^3$, a coating amount of 4.0 g/m$^2$, a rate of change in dimensions of 4.0%, a wet strength of 15.0 N, a liquid holding percentage of 380%, an electrical resistance of 16.0 m$\Omega$, a shielding property of 0, and a droplet disappearance time of 420 seconds for the A surface and 240 seconds for the B surface. The additive content of this coating layer was 50.0%.

[Comparative Example 2]

A raw material having a CSF value of 450 ml and being prepared by beating mercerized softwood kraft pulp was subjected to fourdrinier papermaking so as to obtain a base. A coating solution prepared by mixing polyvinyl alcohol and polyacrylic acid was applied to the base and dried so as to obtain a separator having a thickness of 40 $\mu$m, a density of 0.40 g/cm$^3$, a coating amount of 30.0 g/m$^2$, a rate of change in dimensions of 1.6%, a wet strength of 22.0 N, a liquid holding percentage of 420%, an electrical resistance of 31.0 m$\Omega$, a shielding property of 0, and a droplet disappearance time of 620 seconds for the A surface and 90 seconds for the B surface. The additive content of this coating layer was 80.0%.

[Comparative Example 3]

A raw material having a CSF value of 100 ml and being prepared by further beating mercerized softwood kraft pulp after the CSF value reached 0 ml was subjected to fourdrinier papermaking so as to obtain a separator having a thickness of 40 $\mu$m, a density of 0.60 g/cm$^3$, a coating amount of 0.0 g/m$^2$, a rate of change in dimensions of 2.0%, a wet strength of 3.0 N, a liquid holding percentage of 410%, an electrical resistance of 12.0 m$\Omega$, a shielding property of 0, and a droplet disappearance time of 190 seconds for the A surface and 190 seconds for the B surface.

[Comparative Example 4]

A raw material having a CSF value of 750 ml and being prepared by further beating mercerized softwood kraft pulp after the CSF value reached 0 ml was subjected to fourdrinier papermaking so as to obtain a base. A coating solution prepared by mixing polyvinyl alcohol and polyacrylic acid was applied to the base and dried so as to obtain a separator having a thickness of 130 $\mu$m, a density of 0.85 g/cm$^3$, a coating amount of 5.5 g/m$^2$, a rate of change in dimensions of 1.1%, a wet strength of 18.0 N, a liquid holding percentage of 350%, an electrical resistance of 23.0 m$\Omega$, a shielding property of 4, and a droplet disappearance time of 500 seconds for the A surface and 250 seconds for the B surface. The additive content of this coating layer was 9.1%.

[Comparative Example 5]

A raw material having a CSF value of 550 ml and being prepared by beating mercerized softwood kraft pulp was subjected to fourdrinier papermaking so as to obtain a base. A coating solution prepared by mixing polyvinyl alcohol and polyacrylic acid was applied to the base and dried so as to obtain a separator having a thickness of 60 $\mu$m, a density of 0.40 g/cm$^3$, a coating amount of 4.0 g/m$^2$, a rate of change in dimensions of 2.5%, a wet strength of 8.0 N, a liquid holding percentage of 480%, an electrical resistance of 16.0 m$\Omega$, a shielding property of 4, and a droplet disappearance time of 360 seconds for the A surface and 150 seconds for the B surface. The additive content of this coating layer was 50.0%.

[Comparative Example 6]

A mixture of 5% by mass of a raw material having a CSF value of 100 ml and being prepared by further beating mercerized softwood kraft pulp after the CSF value reached 0 ml, 50% by mass of polypropylene fibers, and 45% by mass of acetalized polyvinyl alcohol fibers was subjected to fourdrinier papermaking so as to obtain a base. A coating solution prepared by mixing polyvinyl alcohol and polyacrylic acid was applied to the base and dried so as to obtain a separator having a thickness of 50 $\mu$m, a density of 0.40 g/cm$^3$, a coating amount of 3.0 g/m$^2$, a rate of change in dimensions of 1.1%, a wet strength of 11.0 N, a liquid holding percentage of 490%, an electrical resistance of 15.0 m$\Omega$, a shielding property of 4, and a droplet disappearance time of 300 seconds for the A surface and 90 seconds for the B surface. The additive content of this coating layer was 66.7%.

[Conventional Example 1]

A mixture of a raw material prepared by further beating 45% by mass of mercerized softwood kraft pulp after the CSF value reached 0 ml until the CSF value increased to 50 ml, 45% by mass of nylon fibers, and 10% by mass of polyvinyl alcohol binder fibers was subjected to cylinder papermaking so as to obtain a separator having a thickness of 100 $\mu$m, a density of 0.60 g/cm$^3$, a rate of change in dimensions of 3.0%, a wet strength of 4.0 N, a liquid holding percentage of 400%, an electrical resistance of 30.8 m$\Omega$, a shielding property of 2, and a droplet disappearance time of 580 seconds for the A surface and 580 seconds for the B surface.

[Conventional Example 2]

Cellophane having a thickness of 30 $\mu$m and the separator of Conventional Example 1 were bonded to each other so as to obtain a separator of Conventional Example 2. A separator having a thickness of 130 $\mu$m, a density of 0.81 g/cm$^3$, a rate of change in dimensions of 3.0%, a wet strength of 10.0 N, a liquid holding percentage of 250%, an electrical resistance of 32.6 m$\Omega$, a shielding property of 0, and a droplet disappearance time of 1200 seconds for the A surface and 580 seconds for the B surface was obtained.

The evaluation results of the separators for alkaline batteries of Examples 1 to 12, Comparative Examples 1 to 6, and Conventional Examples 1 and 2 are shown in Table 1.

[Table 1]

| | Type of fiber | Ratio % by mass | CSF value ml | Type of alkali-resistant resin | Type of additive | Additive content % by mass | Thickness μm | Density g/cm³ | Coating amount g/m² | Rate of change in dimensions % | Wet strength N | Liquid holding percentage % | Electrical resistance mΩ | Shielding property Number of pieces | Droplet disappearance time (sec) A surface | Droplet disappearance time (sec) B surface |
|---|---|---|---|---|---|---|---|---|---|---|---|---|---|---|---|---|
| Example 1 | Mercerized pulp, polypropylene, nylon | 10 / 50 / 40 | 450 / — / — | Polyvinyl alcohol | — | 0.0 | 15 | 0.25 | 0.1 | 2.5 | 6.5 | 500 | 9.0 | 1 | 60 | 20 |
| Example 2 | Mercerized pulp, polypropylene, nylon | 10 / 50 / 40 | 450 / — / — | Polyvinyl alcohol | Polyacrylic acid | 90.0 | 15 | 0.25 | 1.0 | 2.5 | 6.4 | 500 | 8.2 | 1 | 65 | 20 |
| Example 3 | Mercerized pulp, polypropylene, nylon | 10 / 50 / 40 | 450 / — / — | Polyvinyl alcohol | Polyacrylic acid | 90.9 | 15 | 0.25 | 1.1 | 2.5 | 6.4 | 500 | 8.2 | 1 | 65 | 20 |
| Example 4 | Dissolving pulp, recycled cellulose fiber | 70 / 30 | 0 | Polyethylene | Polyacrylic acid | 50.0 | 60 | 0.65 | 4.0 | 1.1 | 15.0 | 480 | 17.0 | 0 | 400 | 200 |
| Example 5 | Mercerized pulp, nylon | 80 / 20 | 300 / — | polypropylene | Polyacrylic acid | 90.0 | 100 | 0.35 | 5.0 | 1.5 | 9.0 | 500 | 14.0 | 1 | 70 | 18 |
| Example 6 | Mercerized pulp | 100 | 300 | Polyvinyl alcohol | polymethacrylic acid | 66.7 | 50 | 0.70 | 3.0 | 1.4 | 13.0 | 400 | 16.0 | 0 | 350 | 220 |
| Example 7 | Mercerized pulp, acetalized polyvinyl alcohol | 80 / 20 | 100 / — | Polyvinyl alcohol | Sodium polyacrylate | 90.0 | 30 | 0.55 | 10.0 | 1.0 | 12.0 | 430 | 14.0 | 0 | 280 | 110 |
| Example 8 | Mercerized pulp | 100 | 100 | Carboxylic-acid-modified polyvinyl alcohol | Polyacrylic acid | 2.0 | 40 | 0.60 | 5.0 | 2.0 | 17.0 | 420 | 19.5 | 0 | 550 | 190 |
| Example 9 | Mercerized pulp | 100 | 100 | Polyvinyl alcohol | Polyacrylic acid | 2.0 | 40 | 0.60 | 5.0 | 2.0 | 17.0 | 430 | 20.3 | 0 | 570 | 220 |
| Example 10 | Mercerized pulp | 100 | 700 / 350 | Polyvinyl alcohol | Polyacrylic acid | 71.4 | 80 | 0.53 | 14.0 | 1.5 | 16.0 | 450 | 19.0 | 0 | 430 | 30 |
| Example 11 | Mercerized pulp | 100 | 650 | Polyvinyl alcohol | Polyacrylic acid | 80.0 | 140 | 0.90 | 25.0 | 0.8 | 18.0 | 330 | 20.4 | 0 | 560 | 280 |
| Example 12 | Mercerized pulp | 100 | 650 | Polyvinyl alcohol | Polyacrylic acid | 80.0 | 130 | 0.85 | 5.5 | 0.9 | 20.0 | 350 | 24.0 | 0 | 520 | 265 |
| Comparative Example 1 | Mercerized pulp, cotton | 90 / 10 | 300 | Polyvinyl alcohol | Polyacrylic acid | 50.0 | 60 | 0.50 | 4.0 | 4.0 | 15.0 | 380 | 16.0 | 0 | 420 | 240 |
| Comparative Example 2 | Mercerized pulp | 100 | 450 | Polyvinyl alcohol | Polyacrylic acid | 80.0 | 40 | 0.40 | 30.0 | 1.6 | 22.0 | 420 | 31.0 | 0 | 620 | 90 |
| Comparative Example 3 | Mercerized pulp | 100 | 100 | — | — | — | 40 | 0.60 | — | 2.0 | 3.0 | 410 | 12.0 | 0 | 190 | 190 |
| Comparative Example 4 | Mercerized pulp | 100 | 750 | Polyvinyl alcohol | Polyacrylic acid | 9.1 | 130 | 0.85 | 5.5 | 1.1 | 18.0 | 350 | 23.0 | 4 | 500 | 250 |
| Comparative Example 5 | Mercerized pulp | 100 | 550 | Polyvinyl alcohol | Polyacrylic acid | 50.0 | 60 | 0.40 | 4.0 | 2.5 | 8.0 | 480 | 16.0 | 4 | 360 | 150 |
| Comparative Example 6 | Mercerized pulp, polypropylene, acetalized polyvinyl alcohol | 5 / 50 / 45 | 100 / — / — | Polyvinyl alcohol | Polyacrylic acid | 66.7 | 50 | 0.40 | 3.0 | 1.1 | 11.0 | 490 | 15.0 | 4 | 300 | 90 |
| Conventional Example 1 | Mercerized pulp, nylon, polyvinyl alcohol binder | 45 / 45 / 10 | 50 / — / — | — | — | — | 100 | 0.60 | — | 3.0 | 4.0 | 400 | 30.8 | 2 | 580 | 580 |
| Conventional Example 2 | Cellophane, separator of Conventional Example 1 | — | — | — | — | — | 130 | 0.81 | — | 3.0 | 10.0 | 250 | 32.6 | 0 | 1200 | 580 |

The separators of Examples are superior since, compared to Conventional Examples 1 and 2, the electrical resistance is lower, since, compared to Conventional Example 1, the shielding properties and wet strength are better, and since, compared to Conventional Example 2, the liquid holding property is higher.

In Examples, the alkali-resistant cellulose fiber content relative to all fibers is 10% or more, and the stability in the alkaline electrolyte solutions is excellent; thus, in any of Examples, the dimensional stability does not cause any problem, and it can be presumed that failures caused by dimensional changes in the separator when the separator is being assembled into a battery or after the assembly do not occur.

It can be presumed from the comparison of Examples to Conventional Examples that the separators of Examples satisfy properties required for the separator for alkaline batteries.

Comparative Example 1 uses a base containing cotton pulp, which has low alkali resistance.

Thus, extensive shrinkage occurs in alkaline electrolyte solutions, and failures, such as overflow of the electrolyte when the battery is assembled, are anticipated to occur.

In Comparative Example 2, the alkali-resistant resin layer content is 30.0 $g/m^2$.

Thus, the electrical resistance value increased to the value similar to those of Conventional Examples.

The comparison of Examples to Comparative Example 2 shows that the alkali-resistant resin layer content is preferably 0.1 to 25.0 $g/m^2$.

In Comparative Example 3, the alkali-resistant resin layer is not provided. Thus, compared to Conventional Examples, the wet strength is low.

The separator of Comparative Example 4 has lower shielding properties than Examples. The alkali-resistant cellulose fibers were beaten even after the CSF value reached 0 ml and continued to be beaten until the CSF value reached 750 ml; thus, fine fibers of the alkali-resistant cellulose fibers had fallen off from the papermaking wires (papermaking screens), and the shielding properties were degraded.

In Comparative Example 5, the CSF value is 550 ml. Presumably thus, the fibers were not fine enough and the shielding properties degraded.

The above-described results show that the CSF value of the alkali-resistant cellulose fibers is preferably 500 to 0 ml, and, if the fibers are further beaten after the CSF value reached 0 ml, the CSF value is preferably up to 700 ml.

The separator of Comparative Example 6 has an alkali-resistant cellulose fiber content of 5% by mass, and the shielding properties are low.

This shows that the alkali-resistant cellulose fiber content is preferably 10% by mass or more.

Examples 1 to 3 provide separators having similar base layers but different additive contents in the alkali-resistant resin layers.

The electrical resistance is lower in Examples 2 and 3 than in Example 1.

This shows that use of the additive can decrease the electrical resistance value of the alkali-resistant resin layer.

When Example 2 and Example 3 are compared, the additive content is higher in Example 3, but the electrical resistance value is the same. This shows that the resistance value cannot be further decreased when the additive content exceeds 90.0% by mass.

Examples 1 to 3 provide separators having a thickness of 15 $\mu$m and a density of 0.25 $g/cm^3$. It is presumed that when the thickness or the density is decreased below those of these bases, the shielding properties are degraded to the level similar to those of Conventional Example 1.

Examples 4 and 5, etc., show that not only polyvinyl alcohol but also polyethylene and polypropylene are suitable for use in the alkali-resistant resin layer of the present invention.

Examples 6 and 7 show that not only polyacrylic acid but also polymethacrylic acid and polyacrylate can be used as the additive without any inconvenience.

Examples 8 and 9 are identical except for the type of the alkali-resistant resin. The separator of Example 8 containing carboxylic acid-modified polyvinyl alcohol has a lower electrical resistance value.

The base layers of Examples 11 and 12 differ from each other in thickness and density. It can be presumed from the additive content that the alkali-resistant resin layer of Example 11 has a low electrical resistance value compared to that of the other.

However, the electrical resistance value of the separator is higher in Example 11. This is presumably due to the thickness and density of the base. It can be presumed that when the base has a larger thickness or higher density than that of Example 11, the electrical resistance value is difficult to decrease compared to Conventional Examples.

The liquid holding percentage and the droplet disappearance time of each of Examples are not particularly poor compared to Conventional Examples, and their properties are considered to satisfy the requirements of the battery separators.

As described above, according to the embodiments, an excellent separator for alkaline batteries and having excellent strength, dimensional stability, and chemical stability in the electrolyte solution and having high shielding properties, can be provided.

Moreover, the resistance value and the incidence of short-circuit failure of the alkaline battery that uses this separator can be reduced.

**Claims**

1. A separator for alkaline batteries, which is used for separating a positive electrode active material and a negative electrode active material from each other and holding a electrolyte solution, the separator comprising:

   a base layer formed only of alkali-resistant fibers, and an alkali-resistant resin layer containing 0.1 to 25 g/m$^2$ of an alkali-resistant resin,
   wherein the alkali-resistant fibers in the base layer contain 10 to 100% by mass of alkali-resistant cellulose fibers.

2. The separator for alkaline batteries according to Claim 1, wherein the alkali-resistant fibers in the base layer further contain alkali-resistant synthetic fibers.

3. The separator for alkaline batteries according to Claim 1 or 2, wherein the alkali-resistant resin in the alkali-resistant resin layer contains at least one resin selected from polyvinyl alcohol, polyethylene, and polypropylene.

4. The separator for alkaline batteries according to any one of Claims 1 to 3, wherein the alkali-resistant resin layer further contains 2 to 90% by mass of polycarboxylic acid.

5. The separator for alkaline batteries according to any one of Claims 1 to 4, wherein the base layer is a nonwoven fabric that has a thickness of 15 to 130 $\mu$m and includes a layer having a density of 0.25 to 0.85 g/cm$^3$.

6. An alkaline battery in which a positive electrode active material and a negative electrode active material are separated from each other with a separator,
   wherein the separator for alkaline batteries according to any one of Claims 1 to 5 is used as the separator.

7. The alkaline battery according to Claim 6, wherein the alkaline battery is one of an alkaline manganese battery, a nickel zinc battery, a silver oxide battery, and an air-zinc battery.

## INTERNATIONAL SEARCH REPORT

| International application No. |
|---|
| PCT/JP2016/083862 |

**A. CLASSIFICATION OF SUBJECT MATTER**
*H01M2/16(2006.01)i*

According to International Patent Classification (IPC) or to both national classification and IPC

**B. FIELDS SEARCHED**

Minimum documentation searched (classification system followed by classification symbols)
H01M2/16

Documentation searched other than minimum documentation to the extent that such documents are included in the fields searched
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-274525 A (Asahi Kasei Corp.), 13 November 2008 (13.11.2008), paragraph [0052]; examples 1, 2 (Family: none) | 1–7 |
| A | WO 2013/114949 A1 (Nippon Kodoshi Corp.), 08 August 2013 (08.08.2013), claims 1 to 5 & JP 2013-157230 A & US 2015/0010828 A1 claims 1 to 7 & EP 2811544 A1 & CN 104081558 A & HK 1201992 A | 1–7 |
| A | JP 2010-202987 A (Asahi Kasei Corp.), 16 September 2010 (16.09.2010), claims 1 to 19 (Family: none) | 1–7 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 02 February 2017 (02.02.17) | 14 February 2017 (14.02.17) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/083862

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-054228 A (Nippon Kodoshi Corp.), 15 March 2012 (15.03.2012), claims 1 to 9 & US 2013/0149614 A1 claims 1 to 9 & WO 2012/017803 A1 & EP 2602844 A1 & CN 103081169 A | 1-7 |
| A | JP 57-118364 A (Matsushita Electric Industrial Co., Ltd.), 23 July 1982 (23.07.1982), (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2119049 A
- JP 2012054228 A
- JP 2006004844 A
- JP 11260337 A